# EUROPÄISCHE PATENTANMELDUNG

(11) **EP 3 851 821 A1**
(43) Veröffentlichungstag der Anmeldung: **21.07.2021**
(21) Anmeldenummer: 20209944.6
(22) Anmeldetag: 25.11.2020
(51) Int. Cl.: G01L 3/10, G01D 5/14

(54) **ELASTOMERKÖRPER SOWIE MESSANORDNUNG AN DEMSELBEN**

(30) Priorität: 14.01.2020 DE 102020200378
(71) Anmelder: ContiTech Antriebssysteme GmbH, 30165 Hannover (DE)
(72) Erfinder: Fiss, Tim, 30419 Hannover (DE); Rosenbohm, Svenja, 30419 Hannover (DE); Sipilä, Pekka, 30419 Hannover (DE)
(74) Vertreter: Continental Corporation

(57) **Zusammenfassung**

Die Erfindung betrifft einen Elastomerkörper (30) zur Drehmomentmessung und/oder Drehzahlmessung einer um deren Längsachse (34) drehbaren, einteiligen oder mehrteiligen Welle (32). Hinsichtlich des Elastomerkörpers ist vorgesehen, dass der Elastomerkörper (30) eine zylindrische Geometrie aufweist und drehfest mit der Welle (32) verbunden oder verbindbar ist, und dass im Elastomermaterial des Elastomerkörpers zum Ausbilden eines Magnetisierungsmusters (40) wenigstens zwei ringförmige magnetische Messbereiche (42, 44) mit unterschiedlicher magnetischer Polarität ausgebildet sind, wobei diese magnetischen Messbereiche derartig ausgebildet und/oder angeordnet sind, dass deren jeweilige Magnetisierungsrichtung mittels mindestens zwei radial oberhalb des Elastomerkörpers (30) angeordneten sowie in Längsrichtung desselben zueinander beabstandeten Magnetfeldsensoren (50, 52) berührungslos messbar ist. Außerdem betrifft die Erfindung eine Messanordnung (60, 100, 140) zur Messung des Drehmoments (M) und/oder der Drehzahl der Welle (32).

## Beschreibung

Die Erfindung betrifft einen Elastomerkörper zur Drehmoment- und/oder Drehzahlmessung einer um deren Längsachse drehbaren einteiligen oder mehrteiligen Welle. Darüber hinaus betrifft die Erfindung eine Messanordnung zur Messung eines Drehmoments und/oder einer Drehzahl an dieser rotierenden Welle.

In der Technik finden Sensoren zur Drehmomentmessung weit verbreitet Anwendung. Mit dem ermittelten Drehmoment lässt sich beispielsweise bei bekannter Drehzahl einer Welle die von der Welle übertragene mechanische Leistung berechnen, sodass der Energieverbrauch beziehungsweise der Wirkungsgrad von Maschinen bestimmen lässt. Zur Drehmomentmessung kommen vielfach Dehnungsmessstreifen zum Einsatz. Ein Drehmomentmesssystem unter Verwendung von Dehnungsmessstreifen erfordert beispielsweise störempfindliche Brückenschaltungen, Verstärker, Analog-Digital-Wandler, Versorgungsspannungen, elektrische Drehübertrager und weitere elektronische Komponenten. Andere Drehmomentsensoren basieren auf einem piezoelektrischen, magnetoelastischen und/oder optischen Messprinzip. Bei einem Elektromotor ist es bei konstanter Drehzahl möglich, mit Hilfe einer Motorstrommessung das Drehmoment an der Abtriebswelle des Motors zu bestimmen. Bei einer derartigen Motorstrommessung eines Elektromotors ergeben sich jedoch erhebliche Ungenauigkeiten, da der Motorstrom von einer Vielzahl von Einflussfaktoren, wie zum Beispiel dem Zustand der Motorlager, dem Einsatzort, der Spannungsversorgung und so weiter abhängt. Darüber hinaus sind Drehmomentmessflansche als eine kostengünstigere Alternative zu den vorstehend aufgezählten Lösungen bekannt. Ein Drehmomentmessflansch erfordert jedoch eine Kupplung, eine Gelenkwelle oder ähnliches zum Abfangen von Störkräften. Darüber hinaus beeinflussen mechanische, thermische und chemische Störgrößen die mit den bekannten Drehmomentmesssensoren erreichbare Messgenauigkeit.

Der Erfindung liegt die Aufgabe zugrunde, ein elastomeres Messmittel vorzustellen, mittels dem Drehmomentmessungen und/oder Drehzahlmessungen an einer Welle möglich sind. Dieses Messmittel soll im Vergleich zu bekannten Drehmomentsensoren einen einfachen konstruktiven Aufbau aufweisen und sich mit einem geringen Aufwand in eine mechanische Konstruktion integrieren lassen. Außerdem soll dieses Messmittel eine hohe Messgenauigkeit bei einer geringen Wartungsintensität aufweisen, und dessen Ausgangssignale sollen mit einem geringen elektronischen Aufwand auswertbar sein. Darüber hinaus soll eine Messanordnung zur Messung eines Drehmoments und/oder einer Drehzahl einer Welle mit Hilfe des erfindungsgemäßen Messmittels vorgestellt werden.

Die Lösung der das Messmittel betreffenden Aufgabe ist durch einen Elastomerkörper erreicht, welcher die Merkmale des Anspruchs 1 aufweist. Die die Messanordnung betreffende Aufgabe ist durch eine Messanordnung mit den Merkmalen des Anspruchs 9 gelöst. Vorteilhafte Weiterbildungen sind in den jeweils zugeordneten abhängigen Ansprüchen definiert.

Demnach betrifft die Erfindung gemäß Anspruch 1 einen Elastomerkörper zur Drehmomentmessung und/oder Drehzahlmessung einer um deren Längsachse drehbaren, einteiligen oder mehrteiligen Welle. Zur Lösung der ersten gestellten Aufgabe ist vorgesehen, dass der Elastomerkörper eine zylindrische Geometrie aufweist und drehfest mit der Welle verbunden oder verbindbar ist, und dass im Elastomermaterial des Elastomerkörpers zum Ausbilden eines Magnetisierungsmusters wenigstens zwei ringförmige magnetische Messbereiche mit unterschiedlicher magnetischer Polarität ausgebildet sind, wobei diese magnetische Messbereiche derartig ausgebildet und/oder angeordnet sind, dass deren jeweilige Magnetisierungsrichtung mittels mindestens zwei radial oberhalb des Elastomerkörpers angeordneten sowie in Längsrichtung desselben zueinander beabstandeten Magnetfeldsensoren berührungslos messbar ist.

Durch die regelmäßig magnetisierten Messbereiche des Elastomerkörpers ist eine vergleichsweise wenig aufwendige, robuste und berührungslose Messung eines von der Welle übertragenen Drehmoments möglich. Hierbei ist eine zugleich gute Messgenauigkeit mit Hilfe von handelsüblichen, einachsigen Magnetfeldsensoren, insbesondere mit Hilfe von einachsigen Hall-Sensoren, erreichbar.

Gemäß einer technisch vorteilhaften Weiterbildung ist vorgesehen, dass der Elastomerkörper drehfest und axial unverschiebbar mit der Welle verbunden ist. Hierdurch ist eine praktisch verlustfreie Übertragung einer drehmomentbedingten Torsionsverformung oder Torsionsbewegung der Welle auf den Elastomerkörper gegeben.

Die drehfeste und axial unverschiebbare Verbindung des Elastomerkörpers mit der zumindest einen Welle erfolgt vorzugsweise durch eine Vulkanisation. Hierdurch ist eine verfahrenstechnisch bewährte und mechanisch besonders robuste sowie haltbare Verbindung zwischen der Welle und dem Elastomerkörper gegeben. Die drehfeste und axial unverschiebbare Verbindung des Elastomerkörpers mit der zumindest einstückigen Welle kann aber auch durch einen festen Formschluss mittels einer Längsaußenverzahnung auf der zumindest einstückigen Welle und einer dazu passenden Längsinnenverzahnung an dem hohlzylindrischen Elastomerkörper erfolgen.

Gemäß einer dazu alternativen Konstruktion ist vorgesehen, dass der Elastomerkörper als eine elastische Kupplung mit zwei axial endseitigen Flanschen ausgebildet ist, wobei die beiden Flansche mit zwei zueinander axial fluchtenden Wellenenden einer mehrteiligen Welle verbindbar sind. Hierdurch kann der Elastomerkörper beziehungsweise die durch den Elastomerkörper gebildete Kupplung neben ihrer eigentlichen Verbindungsfunktion an zwei Wellenenden zugleich die Aufgabe einer Drehmomentmessung und/oder einer Drehzahlmessung der zusammengekuppelten Welle übernehmen. Infolgedessen ist eine besonders einbauraumsparende Drehmomentmessung an einer mehrteiligen Welle möglich.

Weiter ist bevorzugt vorgesehen, dass zur Ausbildung der erwähnten Messbereiche im Elastomermaterial des Elastomerkörpers ferritisches, magnetisiertes Material angeordnet beziehungsweise eingelagert ist. Hierdurch lässt sich der Elastomerkörper auf einfache Art und Weise mit einer dauerhaften beziehungsweise remanenten Magnetisierung versehen.

Gemäß einer ersten weitergebildeten Ausführungsform ist hinsichtlich der Magnetisierungsmuster vorgesehen, dass die beiden Messbereiche des Elastomerkörpers zum Ausbilden eines ersten Magnetisierungsmusters jeweils abwechselnd eine Mehrzahl von in etwa gleich großen magnetischen Nordpoldomänen und Südpoldomänen aufweisen, dass die beiden Messbereiche in Längsrichtung des Elastomerkörpers voneinander beabstandet sind, und dass die Nordpoldomänen sowie die Südpoldomänen des ersten Messbereiches genau gegenüber zu den Nordpoldomänen und Südpoldomänen des zweiten Messbereiches angeordnet sind. Aufgrund der axial beabstandeten Anordnung der beiden Messbereiche ist eine hohe Messempfindlichkeit der Drehmomentmessung realisierbar, da die torsionsbedingte Verwindungsstrecke der Welle beziehungsweise des Elastomerkörpers bei konstantem Torsionswinkel mit zunehmendem Abstand immer größer wird.

Gemäß einer zweiten weitergebildeten Ausführungsform ist hinsichtlich der Magnetisierungsmuster vorgesehen, dass die beiden Messbereiche des Elastomerkörpers zum Ausbilden eines zweiten Magnetisierungsmusters eine bezüglich des Umfangs des Elastomerkörpers umlaufende magnetische Nordpoldomäne und eine umlaufende magnetische Südpoldomäne bilden, wobei die Nordpoldomäne und die Südpoldomäne unmittelbar axial aneinander liegen. Hierdurch lassen sich die Messbereiche einfacher magnetisieren und der Elastomerkörper weist eine geringere axiale Länge zur Einbauraumminimierung sowie zur Verwendung an kurzen Wellen auf.

Gemäß einer dritten weitergebildeten Ausführungsform ist hinsichtlich der Magnetisierungsmuster vorgesehen, dass die beiden Messbereiche des Elastomerkörpers zum Ausbilden eines dritten Magnetisierungsmusters jeweils abwechselnd eine Mehrzahl von in etwa gleich großen magnetischen Nordpoldomänen und magnetischen Südpoldomänen aufweisen, wobei jeweils eine Nordpoldomäne des ersten Messbereiches und eine Südpoldomäne des zweiten Messbereiches unmittelbar axial aneinander liegen. Durch den regelmäßigen Wechsel der magnetischen Polarität innerhalb jedes der beiden Messbereiche ist neben der Drehmomentmessung an kurzen Wellen auch eine Drehzahlmessung ohne eine wesentliche Erhöhung des messtechnischen Aufwands möglich.

Darüber hinaus wird die eingangs genannte Aufgabe durch eine Messanordnung zur Messung eines Drehmoments an einer rotierenden Welle und/oder einer Drehzahl der rotierenden Welle gelöst. Hierbei ist gemäß der Erfindung vorgesehen, dass die Messanordnung einen auf der Welle oder zwischen Wellenenden der Welle angeordneten Elastomerkörper mit zumindest einigen der oben genannten Messmittel-Merkmale aufweist, und dass den ein Magnetisierungsmuster ausbildenden ringförmigen magnetischen Messbereichen des Elastomerkörpers mindestens zwei Magnetfeldsensoren unter Freihaltung eines schmalen Luftspalts zugeordnet sind, mittels denen eine drehmomentbedingte Formänderung des Elastomerkörpers in einem axialen Torsionsabschnitt der Welle messbar ist, und dass eine mit den Magnetfeldsensoren über Sensorleitungen verbundene elektronische Auswerteeinheit vorhanden ist, mittels welcher auf der Basis der ermittelbaren Messsignale von wenigstens zwei Magnetfeldsensoren zumindest das von der Welle übertragene Drehmoment bestimmbar ist.

Hierdurch weist die Messanordnung einen verhältnismäßig einfachen konstruktiven Aufbau auf und erlaubt aufgrund des im Allgemeinen hohen, gut auswertbaren Nutzsignals der Magnetfeldsensoren, beispielsweise in der Form von einachsigen Hall-Sensoren, eine genaue Messung eines von der Welle übertragenen Drehmoments und/oder gegebenenfalls auch eine Messung einer Drehzahl der Welle. Der Luftspalt zwischen den Magnetfeldsensoren und den magnetischen Messbereichen beträgt bevorzugt zwischen 1 mm und 2 mm. Anstelle von Hall-Sensoren können hierzu auch Anisotrop-Magnetosensitive-Sensoren (AMR-Sensoren) oder Riesenmagnetowiderstand-Sensoren (GMR-Sensoren) genutzt werden.

Gemäß einer ersten weitergebildeten Ausführungsform der Messanordnung ist vorgesehen, dass der erste Messbereich eines ersten Magnetisierungsmusters mittels des ersten Magnetfeldsensors zur Erzeugung eines ersten Messsignals und der zweite Messbereich des ersten Magnetisierungsmusters mittels des zweiten Magnetfeldsensors zur Erzeugung eines zweiten Messsignals berührungslos abtastbar ist, wobei das von der Welle übertragene Drehmoment aus einer Phasenverschiebung zwischen den beiden Messsignalen der beiden Magnetfeldsensoren mittels der elektronischen Auswerteeinheit ermittelbar ist und/oder die Drehzahl der Welle aus einer Frequenz mindestens eines Messsignals der Magnetfeldsensoren mittels der elektronischen Auswerteeinheit bestimmbar ist. Aufgrund der Bestimmung der Phasenverschiebung haben äußere Störgrößen nur einen verhältnismäßig geringen Einfluss auf das Ergebnis der Drehmomentmessung.

Gemäß einer zweiten weitergebildeten Ausführungsform der Messanordnung ist vorgesehen, dass der erste Messbereich eines zweiten Magnetisierungsmusters mittels des ersten Magnetfeldsensors zur Erzeugung eines ersten Messsignals und der zweite Messbereich des zweiten Magnetisierungsmusters mittels des zu dem ersten Magnetfeldsensor entgegengesetzt orientierten zweiten Magnetfeldsensors zur Erzeugung eines zweiten Messsignals berührungslos abtastbar ist, wobei das von der Welle übertragene Drehmoment aus einer Differenzbildung zwischen den Messsignalen der beiden Magnetfeldsensoren mittels eines Differenzverstärkers der elektronischen Auswerteeinheit ermittelbar ist. Aufgrund der entgegengesetzten Anordnung der Sensitivitätsachsen der Magnetfeldsensoren sind deren Messsignale mittels eines Differenzverstärkers als Teil der elektronischen Auswerteeinheit auswertbar. Eine absolute Amplitude der Messsignale bleibt damit ohne wesentlichen Einfluss auf das Messergebnis. Durch die Differenzmessung ist zudem eine gute Störunempfindlichkeit der Messanordnung gegeben, da ein unter Umständen die beiden Messsignale überlagerndes Störsignal durch die Differenzbildung zu Null wird.

Gemäß einer dritten weitergebildeten Ausführungsform der Messanordnung ist vorgesehen, dass der erste Messbereich eines dritten Magnetisierungsmusters mittels des ersten Magnetfeldsensors zur Erzeugung eines ersten Messsignals und der zweite Messbereich des dritten Magnetisierungsmusters mittels des dem ersten Magnetfeldsensor entgegengesetzt orientierten zweiten Magnetfeldsensors zur Erzeugung eines zweiten Messsignals berührungslos abtastbar ist, wobei das von der Welle übertragene Drehmoment aus einer Differenzbildung zwischen den Messsignalen der beiden Magnetfeldsensoren mittels eines Differenzverstärkers der elektronischen Auswerteeinheit ermittelbar ist und/oder eine Drehzahl der Welle aus einer Frequenz eines der Messsignale der beiden Magnetfeldsensoren mittels der elektronischen Auswerteeinheit ermittelbar ist. Hierdurch ist neben dem Drehmoment bei unverändertem Messaufwand die Drehzahl an der Welle messbar.

Bevorzugt ist mindestens einem der beiden Magnetfeldsensoren ein zusätzlicher radial messender Magnetfeldsensor zum Ausmessen und Bewerten einer Höhe mindestens eines der oben erwähnten Luftspalte zugeordnet. Hierdurch kann der Abstand der die Torsion der Welle messenden Magnetfeldsensoren über die Höhe des mindestens einen Luftspalts optimal eingestellt werden. Die Sensitivitätsachse des zusätzlichen radialen Magnetfeldsensors verläuft hierbei orthogonal zu den Sensitivitätsachsen der beiden anderen Magnetfeldsensoren, die ihrerseits parallel, jedoch entgegensetzt zueinander orientiert sind.

Zum besseren Verständnis der Erfindung ist der Beschreibung eine Zeichnung beigefügt, in der verschiedene Ausführungsbeispiele schematisch dargestellt sind. In der Zeichnung zeigt
Fig. 1a ein Magnetisierungsmuster eines plattenförmigen Elastomerkörpers in einem xy-Diagramm,
Fig. 1b einen quantitativen Verlauf der magnetischen Flussdichte des plattenförmigen Elastomerkörpers entlang der x-Achse des Diagramms gemäß Fig. 1a,
Fig. 2 eine perspektivische Ansicht einer drehbaren Welle mit einer erfindungsgemäßen Messanordnung gemäß einer ersten Ausführungsform, aufweisend einen hohlzylindrischen Elastomerkörper mit einem ersten Magnetisierungsmuster sowie zwei Magnetfeldsensoren zur Drehmomentmessung und/oder Drehzahlmessung,
Fig. 3 einen zeitlichen Verlauf eines ersten Messsignals und eines zweiten Messsignals der Messanordnung gemäß Fig. 2 bei vorhandenem Drehmoment,
Fig. 4 eine schematische Draufsicht auf eine zweite Ausführungsform einer Messanordnung mit einem hohlzylindrischen Elastomerkörper mit einem zweiten Magnetisierungsmuster bei fehlendem Drehmoment,
Fig. 5 eine Draufsicht auf die Messanordnung gemäß Fig. 4 bei vorhandenem Drehmoment,
Fig. 6 eine schematische Draufsicht auf eine dritte Ausführungsform einer Messanordnung mit einem hohlzylindrischen Elastomerkörper mit einem dritten Magnetisierungsmuster bei fehlendem Drehmoment, und
Fig. 7 eine alternative Anordnung der Magnetfeldsensoren zur Messung des Drehmoments einer Welle mittels des hohlzylindrischen Elastomerkörpers gemäß Fig. 6 und mit mindestens einem zusätzlichen Magnetfeldsensor zur radialen Abstandsbestimmung.

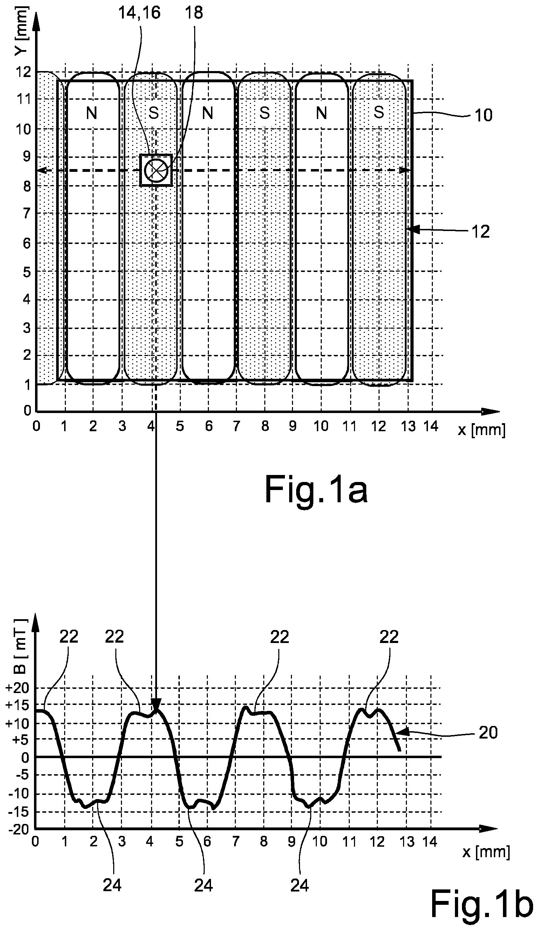

Die Fig. 1a zeigt ein xy-Diagramm eines linearen Magnetisierungsmusters eines plattenförmigen Elastomerkörpers 10. Fig. 1b, auf die zugleich Bezug genommen wird, illustriert einen zugehörigen quantitativen Verlauf einer magnetischen Flussdichte des plattenförmigen Elastomerkörpers 10 entlang der x-Achse an einer exemplarisch vorgegebenen y-Position des Diagramms der Fig. 1a.

Der Elastomerkörper 10 weist eine näherungsweise quaderförmige beziehungsweise plattenförmige Geometrie auf und besteht sehr weitgehend aus Gummi, einer Gummimischung, Silikon oder ähnlichem. Er weist hier lediglich exemplarisch drei Nordpoldomänen N und drei Südpoldomänen S auf, die jeweils rechteckförmig ausgebildet sind und die entlang der x-Achse ein regelmäßiges streifenförmiges remanentes Magnetisierungsmuster 12 bilden, in dem sich die Nordpoldomänen N und Südpoldomänen S jeweils abwechseln.

Zur Ausbildung des Magnetisierungsmusters 12 ist das Elastomermaterial des Elastomerkörpers 10 mit einem ferritischen, magnetisierbaren Material versetzt beziehungsweise gleichmäßig angefüllt oder angereichert, das beispielsweise mit einem nicht dargestellten Elektromagneten, einer Spule oder dergleichen entsprechend magnetisierbar ist. Mittels eines Magnetfeldsensors 14 ist eine lokale Flussdichte des Magnetisierungsmusters 12 an jeder beliebigen Stelle entlang der x-Achse und der y-Achse des Diagramms gemäß Fig. 1a messbar.

Der Magnetfeldsensor 14 ist bevorzugt ein einachsiger, halbleitender Hall-Sensor 16, dessen Sensitivitätsachse 18 beziehungsweise Messachse lediglich beispielhaft senkrecht auf der Oberfläche des hier plattenförmigen Elastomerkörpers 10 steht. Die x-Koordinate des Magnetfeldsensors 14 beträgt in dem in Fig. 1a dargestellten Beispiel etwa 4,1 mm und die zugehörige y-Koordinate des Magnetfeldsensors 14 beträgt hier 8,5 mm. An dieser Position ergibt sich ausweislich des Diagramms gemäß Fig. 1b eine lokale Flussdichte B von ungefähr +15 mT.

Durch ein Abtasten des linearen Magnetisierungsmusters 12 entlang der x-Achse zwischen der x-Koordinate x = 0 mm bis x = 13 mm auf der Höhe der y-Koordinate y = 8,5 mm ergibt sich der in Fig. 1b dargestellte Kurvenverlauf 20 der magnetischen Flussdichte B in mT entlang der x-Achse mit periodischen positiven und negativen Messwerten 22, 24. Die Südpoldomänen S ergeben hierbei jeweils einen positiven Messwert 22 mit positiver magnetischer Flussdichte B, während die Nordpoldomänen N negative Messwerte 24 mit negativer magnetischer Flussdichte B ergeben. Da die Nordpoldomänen N beziehungsweise die Südpoldomänen S entlang der x-Achse jeweils eine konstante Breite von hier lediglich beispielhaft etwa 2 mm aufweisen und praktisch unmittelbar aneinander grenzen, ist mittels des plattenförmigen Elastomerkörpers 10 mit dem linearen Magnetisierungsmuster 12 durch das berührungslose Abtasten mit Hilfe des Magnetfeldsensors 14 ein gegenüber Umwelteinflüssen robustes, inkrementelles und präzises Wegmesssystem realisierbar. Die Bestimmung der relativen Position des Magnetfeldsensors 14 entlang der x-Achse in Bezug zu dem Elastomerkörper 10 erfolgt hierbei beispielsweise durch Abzählen der negativen und/oder positiven Messwerte 22, 24 innerhalb des gemessenen Kurvenverlaufs 20.

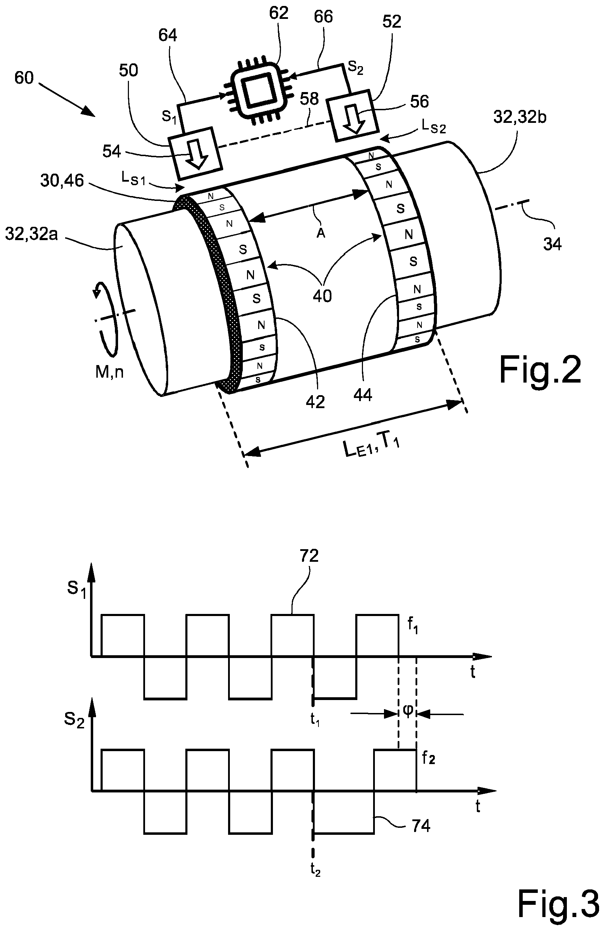

Die Fig. 2 zeigt eine perspektivische Ansicht einer drehbaren Welle 32 mit einer erfinderischen Messanordnung 60 gemäß einer ersten Ausführungsform. Diese Welle 32 kann als eine zweiteilige Welle ausgebildet sein, welche zwei Wellenenden 32a, 32b aufweist, die mit geringem axialen Abstand oder axial unmittelbar aneinander angeordnet sind. Bei einer Ausbildung als zweiteilige Welle verbindet der Elastomerkörper 30 die beiden Wellenenden 32a, 32b drehfest. Auf der Welle 32 ist ein Elastomerkörper 30 befestigt, welcher ein erstes Magnetisierungsmuster aufweist, das zur Drehmomentmessung und/oder Drehzahlmessung berührungslos von zwei Magnetfeldsensoren abtastbar ist. Die Fig. 3, auf welche im weiteren Fortgang der Beschreibung zugleich Bezug genommen wird, veranschaulicht den zeitlichen Verlauf eines ersten Messsignals und eines zweiten Messsignals der Messanordnung 60 gemäß Fig. 2 bei einem auf die Welle 32 einwirkenden Drehmoment.

Der Elastomerkörper 30 weist erkennbar eine hohlzylindrische Geometrie auf und ist drehfest sowie axial unverschiebbar mit einer zylindrischen Welle 32 verbunden. Die Welle 32 ist um deren Längsachse 34 drehbar angeordnet. Der Elastomerkörper 30 kann beispielsweise mittels Formschluss durch eine Längsaußenverzahnung auf der Welle 32 und einer Längsinnenverzahnung an dem Elastomerkörper 30, durch Vulkanisation, Verkleben, elastisches Aufpressen oder dergleichen mit der Welle 32 fest verbunden sein. In einem Torsionsabschnitt T₁ der Welle 32 wird jede drehmomentbedingte Torsion der Welle 32 im Idealfall verlustfrei in eine dazu korrespondierende Verdrehung beziehungsweise Torsion des elastischen Elastomerkörpers 30 übertragen. Auf die Welle 32 wirkt dabei ein zu messendes Drehmoment M bei einer Drehzahl n ein.

Im Elastomermaterial des Elastomerkörpers 30 ist ein erstes Magnetisierungsmuster 40 ausgebildet, welches durch zwei axial endseitigen, ringförmigen und magnetischen Messbereichen 42, 44 mit einer jeweils unterschiedlichen magnetischen Polarität gebildet ist, deren jeweilige Magnetisierungsrichtung (N, S) mittels mindestens zwei radial oberhalb des Elastomerkörpers 30 angeordneten Magnetfeldsensoren 50, 52 berührungslos messbar ist. In das elastomere Material des Elastomerkörpers 30 ist zur Schaffung der magnetischen Messbereiche 42, 44 ein ferritisches, dauerhaft magnetisierbares Material 46 vorzugsweise homogen verteilt eingebracht, welches mit Hilfe eines Elektromagneten, einer Spule, eines Permanentmagneten oder dergleichen dauerhaft magnetisiert worden ist. Jeder der beiden axial endseitigen Messbereiche 42, 44 bildet zur Realisierung der unterschiedlichen magnetischen Polarität hier nur beispielhaft jeweils eine Vielzahl von umfangsseitig gleichmäßig zueinander angeordneten, gleich großen Nordpoldomänen N und Südpoldomänen S aus. Hierbei liegen sich jeweils eine Nordpoldomäne N des ersten Messbereichs 42 und jeweils eine Nordpoldomäne N des zweiten Messbereichs 42, 44 axial fluchtend gegenüber. Dasselbe gilt für die Südpoldomänen S in den Messbereichen 42, 44.

Die Messanordnung 60 zur Erfassung eines Drehmoments M und/oder einer Drehzahl n der Welle 32 weist den mit der Welle 32 fest verbundenen Elastomerkörper 30, die beiden Magnetfeldsensoren 50, 52 sowie eine elektronische Auswerteeinheit 62 auf. Der erste Magnetfeldsensor 50 und der zweite Magnetfeldsensor 52 sind vorzugsweise Hall-Sensoren mit einer möglichst hohen magnetischen Empfindlichkeit. Die mit Pfeilen dargestellten Sensitivitätsachsen 54, 56 beziehungsweise Messachsen der beiden Magnetfeldsensoren 50, 52 verlaufen jeweils radial einwärts in Richtung zu den zugeordneten Messbereichen 42, 44 beziehungsweise senkrecht zur nicht bezeichneten Mantelfläche des zylindrischen Elastomerkörpers 30. Zwischen den jeweiligen Magnetfeldsensoren 50, 52 und den zugeordneten Messbereichen 42, 44 ist dabei jeweils ein schmaler Luftspalt L_{S1}, L_{S2} von vorzugsweise 1,0 mm bis 2,0 mm freigehalten. Die Magnetfeldsensoren 50, 52 sind zudem entlang einer gedachten Verbindungsachse 58 ausgerichtet, die parallel beabstandet zu der Längsachse 34 der Welle 32 verläuft.

Die elektrischen Messsignale S₁, S₂ der beiden Magnetfeldsensoren 50, 52 werden der elektronischen Auswerteeinheit 62 über jeweils eine Sensorleitung 64, 66 zur Verstärkung, Aufbereitung, Filterung, Digitalisierung, Auswertung und Messung des aktuellen Drehmoments M und/oder der Drehzahl n der Welle 32 zugeleitet. Der erste magnetische Messbereich 42 ist zur Erzeugung des ersten Messsignals S₁ hierbei mittels des zugeordneten ersten Magnetfeldsensors 50 und der zweite Messbereich 44 ist zur Erzeugung des zweiten Messsignals S₂ mittels des zugeordneten zweiten Magnetfeldsensors 52 berührungslos unter Einhaltung der Luftspalte L_{S1}, L_{S2} abtastbar.

Ein erster, hier lediglich exemplarisch rechteckförmiger Kurvenverlauf 72 in dem Diagramm gemäß Fig. 3 zeigt einen zeitlichen Verlauf des ersten Messsignals S₁ und ein zweiter, gleichfalls rechteckförmiger Kurvenverlauf 74 zeigt den zeitlichen Verlauf des zweiten Messsignals S₂. Diese beiden Kurvenverläufe 72, 74 können im praktischen Messbetrieb einen von der Rechteckform abweichenden, beispielsweise näherungsweise sinusartigen Verlauf aufweisen (siehe Fig. 1b). Bis zu den Zeitpunkten t₁, t₂ ist das auf die Welle 32 einwirkende Drehmoment M Null und die beiden Kurvenverläufe 72, 74 verlaufen im Wesentlichen synchron zueinander. Durch das Einwirken eines Drehmoments M auf die Welle 32 kommt es hier beispielhaft ab den Zeitpunkten t₁, t₂ zu einer drehmomentbedingten Torsionsbewegung der ganzen Welle 32 um deren Längsachse 34 und damit auch innerhalb des Torsionsabschnitts T₁ der Welle 32. Infolgedessen verdreht sich der mit der Welle 32 verbundene Elastomerkörper 30 über die axiale Länge L_{E1} und es kommt in der Folge zwischen den beiden magnetischen Messbereichen 42, 44 zu einem Winkelversatz in Umfangsrichtung. Dieser Drehwinkelversatz führt zu einer drehmomentabhängigen Phasenverschiebung ϕ zwischen den beiden, von den Magnetfeldsensoren 50, 52 erzeugten elektrischen Messsignalen S₁, S₂. Diese Phasenverschiebung ϕ ist mittels der elektronischen Auswerteeinheit 62 zur Messung des Drehmoments M unter Verwendung entsprechender programmtechnischer Algorithmen auswertbar.

Zusätzlich oder alternativ kann mittels der Messanordnung 60 die Drehzahl n der Welle 32 gemessen werden, indem eine Frequenz f₁, f₂ zumindest eines der beiden Messsignale S₁, S₂ der beiden Magnetfeldsensoren 50, 52 mittels der Auswerteeinheit 62 gemessen und in eine in der Technik gebräuchliche Maßeinheit, wie zum Beispiel in Umdrehungen pro Minute umgerechnet wird.

Der hohlzylindrische Elastomerkörper 30 kann darüber hinaus als eine in den Figuren nicht dargestellte elastische Kupplung mit zwei axialen Enden ausgebildet sein, an denen jeweils ein bevorzugt kreisringförmiger Flansch angeformt ist. Die Flansche sind dann mit zwei axial zueinander fluchtend ausgerichteten Wellenenden einer nicht dargestellten mehrteiligen Welle zur Schaffung einer kraftschlüssigen Kopplung der Wellenteile verbindbar. Durch den als elastische Kupplung ausgebildeten Elastomerkörper 30 lässt sich somit eine mechanische Verbindungsfunktion zwischen zwei Wellenenden bei gleichzeitiger Ermöglichung einer Drehmoment- und/oder Drehzahlmessung mittel des magnetisierten Elastomerkörpers 30 realisieren, was zu einer beträchtlichen Platz- und Kosteneinsparung führt.

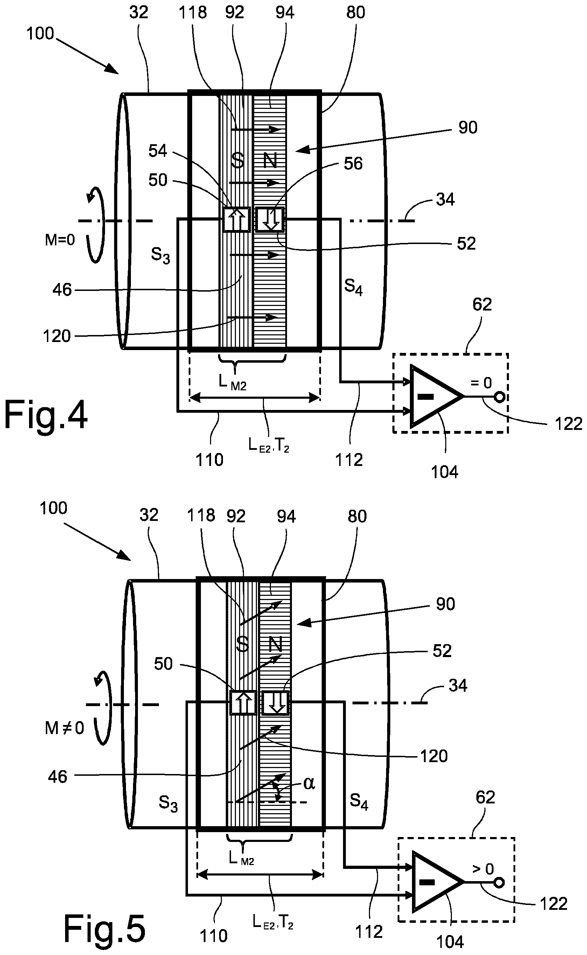

Die Fig. 4 zeigt eine schematische Draufsicht auf eine zweite Ausführungsform einer Messanordnung 100 mit einem hohlzylindrischen Elastomerkörper 80 mit einem zweiten Magnetisierungsmuster 90 bei fehlendem Drehmoment, und die Fig. 5, auf welche im weiteren Fortgang der Beschreibung zugleich Bezug genommen wird, zeigt eine Draufsicht auf die Messanordnung gemäß Fig. 4 bei vorhandenem Drehmoment.

Der als Messkörper dienende Elastomerkörper 80 weist ebenfalls eine in etwa hohlzylindrische Geometrie auf und ist drehfest sowie axial unverschiebbar mit der zylindrischen Welle 32 verbunden. Im Vergleich zu dem Elastomerkörper gemäß Fig. 2 weist der Elastomerkörper 80 hier eine deutlich reduzierte axiale Länge L_{E2} auf. Hierdurch ist eine Messung des Drehmoments M auch an einer axial sehr kurzen Welle 32 beziehungsweise an einem Wellenstummel problemlos möglich.

In dem Elastomermaterial des Elastomerkörpers 80 ist ein zweites Magnetisierungsmuster 90 ausgebildet, welches aus zwei ringförmig umlaufenden magnetischen Messbereichen 92, 94 mit jeweils unterschiedlicher magnetischer Polarität (S, N) gebildet ist. Deren jeweilige Magnetisierungsrichtung ist ebenfalls mit Hilfe der zwei radial oberhalb des Elastomerkörpers 80 geringfügig beabstandet angeordneten Magnetfeldsensoren 50, 52 berührungslos messbar. Die Luftspalte zwischen den Magnetfeldsensoren 50, 52 und den ihnen jeweils zugeordneten Messbereichen 92, 94 sind hier verdeckt und daher in Fig. 4 nicht sichtbar. Das Magnetisierungsmuster 90 ist wiederum durch innerhalb des elastomeren Materials des Elastomerkörpers 80 eingelagertes, dauerhaft magnetisiertes Material 46 gebildet. Jeder der beiden, im Unterschied zur Fig. 2 axial abstandsfrei aneinander stoßenden Messbereiche 92, 94 bildet eine gleich große, umfangsbezogen durchgängige Südpoldomäne S beziehungsweise Nordpoldomäne N aus.

Die axiale Länge L_{M2} des Magnetisierungsmusters 90 ist kleiner bemessen als der für die Messung des Drehmoments M mittels des Elastomerkörpers 80 relevante Torsionsabschnitt T₂ der Welle 32 beziehungsweise kleiner als die axiale Länge L_{E2} des Elastomerkörpers 80, woraus im Vergleich zu der Messanordnung gemäß Fig. 2 eine geringere Empfindlichkeit resultiert. Da innerhalb der umlaufenden Messbereiche 92, 94 kein Wechsel der magnetischen Polarität beziehungsweise keine alternierende Abfolge von Südpoldomänen S und Nordpoldomänen N erfolgt, ist eine Messung der Drehzahl der Welle 32 mit der Messanordnung 100 nicht möglich.

Die in Fig. 4 dargestellte zweite Ausführungsform der Messanordnung 100 zur Erfassung des Drehmoments M der Welle 32 weist den mit der Welle 32 fest verbundenen hohlzylindrischen Elastomerkörper 80, die beiden Magnetfeldsensoren 50, 52 sowie die elektronische Auswerteeinheit 62 mit einem Differenzverstärker 104 auf.

Die durch Pfeile veranschaulichten Sensitivitätsachsen 54, 56 der beiden Magnetfeldsensoren 50, 52 sind abweichend von der Ausführungsform gemäß Fig. 2 entgegengesetzt zueinander orientiert, während deren räumliche Positionierung in Bezug zu den jeweils zugeordneten, ringförmig umlaufenden Messbereichen 92, 94 wiederum identisch ist.

Zwei elektrische Messsignale S₃, S₄ der beiden Magnetfeldsensoren 50, 52 werden dem Differenzverstärker 104 innerhalb der elektronischen Auswerteeinheit 62 über jeweils eine Sensorleitung 110, 112 zur Messung des Drehmoments M der Welle 32 zugeleitet. Der erste magnetische Messbereich 92 ist zur Erzeugung des ersten Messsignals S₃ hierbei mittels des zugeordneten ersten Magnetfeldsensors 50 und der zweite Messbereich 44 ist zur Erzeugung des zweiten Messsignals S₄ mittels des zugeordneten zweiten Magnetfeldsensors 52 berührungslos unter jeweiliger Einhaltung eines hier nicht dargestellten schmalen Luftspalts berührungslos abtastbar.

In der Darstellung der Fig. 4 wirkt kein Drehmoment auf die Welle 32 ein, weshalb keine drehmomentbedingte Torsionsbewegung im mit der Welle 32 fest verbundenen Elastomerkörper 80 auftritt. Daher verlaufen die von der Südpoldomäne S in Richtung der Nordpoldomäne N gerichteten magnetischen Feldlinien 118, 120 parallel zur Längsachse 34 der Welle 32. Infolgedessen weisen die beiden Messsignale S₃, S₄ der beiden Magnetfeldsensoren 50, 52 bei unterschiedlicher Polarität einen gleich großen Absolutwert auf, so dass ein drehmomentabhängiges Ausgangssignal 122 des Differenzverstärkers 104 aufgrund der im Differenzverstärker 104 vollzogenen analogen Differenzbildung zwischen den Spannungswerten der beiden Messsignale S₃, S₄ Null ist.

In der Fig. 5 wirkt ein Drehmoment M auf die Welle 32 ein, welches zu einer Torsion der Welle 32 führt, wodurch sich die magnetisierten Messbereiche 92, 94 des Elastomerkörpers 80 in Umfangsrichtung geringfügig gegeneinander verschieben beziehungsweise verdrehen. Hierdurch verlaufen die Feldlinien 118, 120 zwischen der Südpoldomäne S und der Nordpoldomäne N nicht mehr parallel zur Längsachse 34 der Welle 32, sondern sind jeweils um einen Winkel α gegen die Längsachse 34 der Welle 32 verkippt beziehungsweise gedreht, so dass die Messsignale S₃, S₄ bei unveränderter Polarität unterschiedlich hohe Absolutwerte aufweisen. Durch die Differenzbildung zwischen den beiden Messsignalen S₃, S₄ innerhalb des Differenzverstärkers 104 der elektronischen Auswerteeinheit 62 ergibt sich dadurch ein von Null verschiedenes Ausgangssignal 122, welches in Fig. 4 hier nur beispielhaft positiv ist und in Abhängigkeit von den magnetischen Polaritäten auch negativ sein kann.

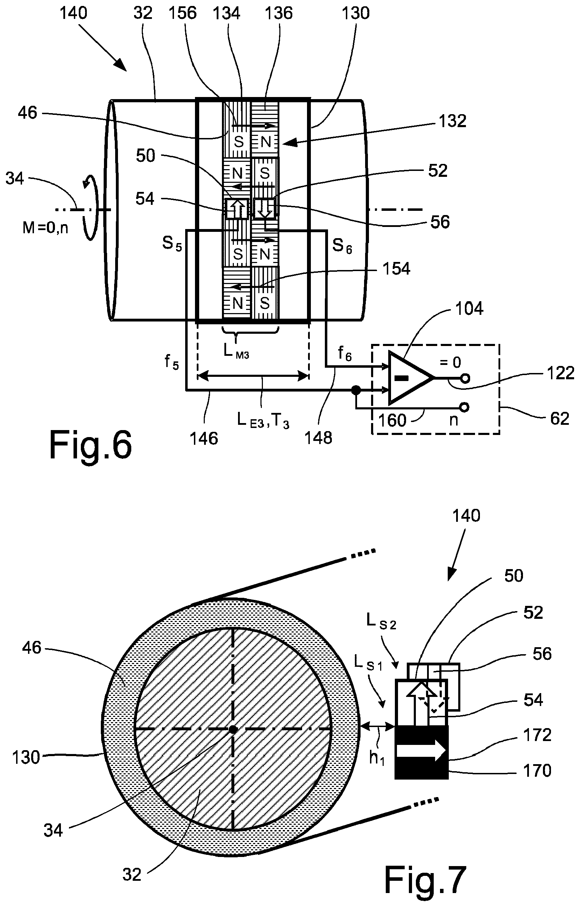

Die Fig. 6 zeigt eine schematische Draufsicht auf eine dritte Ausführungsform einer Messanordnung 140 mit einem hohlzylindrischen Elastomerkörper 130 mit einem dritten Magnetisierungsmuster 132 bei fehlendem Drehmoment. Der Elastomerkörper 130 weist ebenfalls eine in etwa hohlzylindrische Geometrie auf und ist drehfest sowie axial unverschiebbar mit der zylindrischen Welle 32 verbunden. In dem Elastomermaterial des Elastomerkörpers 130 ist ein drittes Magnetisierungsmuster 132 ausgebildet, welche zwei ringförmig umlaufende magnetische Messbereiche 134, 136 aufweist, deren jeweilige Magnetisierungsrichtung mit Hilfe der zwei radial oberhalb des Elastomerkörpers 130 geringfügig beabstandet angeordneten Magnetfeldsensoren 50, 52 berührungslos messbar ist. Die Luftspalte zwischen den Magnetfeldsensoren 50, 52 und den ihnen jeweils zugeordneten Messbereichen 134, 136 sind hier gleichfalls verdeckt und daher nicht sichtbar.

Die dritte Ausführungsform des Magnetisierungsmusters 132 ist durch innerhalb des elastomeren Materials des Elastomerkörpers 130 gleichmäßig verteilt eingelagertes und dauerhaft magnetisiertes, ferritisches Material 46 realisiert. Jeder der beiden axial direkt aneinander stoßenden Messbereiche 134, 136 weist jeweils eine Mehrzahl von ungefähr gleich großen magnetischen Nordpoldomänen N und Südpoldomänen S auf, wobei jeweils eine Nordpoldomäne N des ersten Messbereichs 134 jeweils einer Südpoldomäne S des zweiten Messbereichs 136 des Elastomerkörpers 130 unmittelbar zueinander fluchtend axial aneinander liegt. Dadurch, dass die magnetischen Polaritäten N, S innerhalb der jeweiligen Messbereiche 134, 136 umfangsseitig alternierend ausgeführt sind, ist mittels des dritten Magnetisierungsmusters 132 analog zur Fig. 2 und entgegen der in den Figuren 4 und 5 dargestellten Ausführungsformen der Messanordnung eine Messung der Drehzahl n der Welle 32 möglich.

Eine axiale Länge L_{M3} des Magnetisierungsmusters 132 ist wiederum kleiner als ein hier berücksichtigter axialer Torsionsabschnitt T₃ der Welle 32. Die axiale Länge L_{E3} des Elastomerkörpers 130 entspricht der Länge des Torsionsabschnitts T₃, in dem die Messung des Drehmoments M erfolgt, so dass die Welle 32 von axial kurzer Bauart sein kann.

Die dritte Messanordnung 140 zur Erfassung des Drehmoments M und/oder der Drehzahl n der Welle 32 weist den mit der Welle 32 fest verbundenen hohlzylindrischen Elastomerkörper 130, die beiden Magnetfeldsensoren 50, 52 sowie die elektronische Auswerteeinheit 62 mit dem darin integrierten Differenzverstärker 104 auf.

Die Sensitivitätsachsen 54, 56 beziehungsweise Messachsen der beiden Magnetfeldsensoren 50, 52 sind wie bei dem Ausführungsbeispiel gemäß den Figuren 4 und 5 entgegengesetzt zueinander ausgerichtet und weisen dieselbe räumliche Anordnung in Bezug zu den beiden jeweils zugeordneten, ringförmig umlaufenden Messbereichen 134, 136 auf. Zwei elektrische Messsignale S₅, S₆ der beiden Magnetfeldsensoren 50, 52 werden dem Differenzverstärker 104 innerhalb der elektronischen Auswerteeinheit 62 über jeweils eine Sensorleitung 146, 148 zur Messung des aktuellen Drehmoments M der Welle 32 zugeführt. Der erste magnetische Messbereich 134 ist zur Erzeugung des ersten Messsignals S₅ hierbei mittels des zugeordneten ersten Magnetfeldsensors 50 messbar und der zweite Messbereich 44 ist zur Erzeugung des zweiten Messsignals S₆ mittels des zugeordneten zweiten Magnetfeldsensors 52 unter jeweiliger Einhaltung eines schmalen Luftspalts berührungslos abtastbar.

In der Darstellung gemäß Fig. 6 wirkt kein Drehmoment auf die Welle 32 ein, sodass das Drehmoment M gleich Null ist. Demzufolge tritt keine drehmomentbedingte Torsion der Welle 32 und des damit fest verbundenen Elastomerkörpers 130 auf. Dadurch verlaufen die magnetischen Feldlinien 154, 156 von den Südpoldomänen S jeweils in Richtung zu den Nordpoldomänen N parallel zur Längsachse 34 der Welle 32. Infolgedessen weisen die beiden Messsignale S₅, S₆ bei entgegengesetzter Polarität einen gleich großen Absolutwert auf, so dass ein drehmomentabhängiges Ausgangssignal 122 des Differenzverstärkers 104 aufgrund der im Differenzverstärker 104 erfolgenden Differenzbildung zwischen den beiden Messsignalen S₅, S₆ gleich Null ist.

Bei einem von Null verschiedenen Drehmoment M kommt es hingegen zu einer Torsion der Welle 32 und des Elastomerkörpers 130, die eine entgegengesetzt umfangsseitige Verdrehung der beiden Messbereiche 134, 136 des Elastomerkörpers 130 verursacht. Infolgedessen verkippen die magnetischen Feldlinien 154, 156 in Bezug zur Längsachse 34, so dass das Ausgangssignal 122 des Differenzverstärkers 104 einen von Null verschiedenen positiven oder negativen Wert annimmt.

An der vom ersten Magnetfeldsensor 50 kommenden ersten Sensorleitung 146 ist hier eine dritte Sensorleitung 160 angeschlossen, über welche das vom ersten Magnetfeldsensor 50 kommende Messsignal S₅ und damit auch dessen Frequenz f₅ zur Berechnung der Drehzahl n der Welle 32 mit Hilfe der elektronischen Auswerteeinheit 62 abgreifbar und auswertbar ist. Ebenso kann eine Frequenz f₆ des Messsignals S₆ des zweiten Magnetfeldsensors 50 zur Messung der Drehzahl n der Welle 32 herangezogen werden.

Die Fig. 7 veranschaulicht eine alternative Anordnung der Magnetfeldsensoren 50, 52 zur Abtastung des hohlzylindrischen Elastomerkörpers 130 gemäß Fig. 6 mit mindestens einem zusätzlichen Magnetfeldsensor 172. Die Messanordnung 140 weist wiederum den Elastomerkörper 130 auf, der koaxial auf der Welle 32 mit der Längsachse 34 drehfest und schiebefest angeordnet ist. In dem Elastomerkörper 130 ist das remanent magnetisierte, ferritische Material 46 homogen verteilt angeordnet und zur Erzeugung eines hier nicht dargestellten Magnetisierungsmusters entsprechend magnetisiert. Die beiden Magnetfeldsensoren 50, 52 weisen in Bezug zum Elastomerkörper 130 den gleichen radialen Abstand auf, so dass gleich große Luftspalte L_{S1}, L_{S2} von jeweils 1,0 mm bis zu 2,0 mm gebildet sind. Die Sensitivitätsachsen 54, 56 der beiden Magnetfeldsensoren 50, 52 verlaufen jedoch entgegengesetzt und parallel zueinander sowie im Wesentlichen tangential zum hohlzylindrischen Elastomerkörper 130.

In der Darstellung von Fig. 7 ist dem ersten Magnetfeldsensor 50 beispielhaft ein zusätzlicher radialer, einachsiger Magnetfeldsensor 170 auf der Basis eines halbleitenden Hall-Sensors zugeordnet, dessen Sensitivitätsachse 172 beziehungsweise Messachse senkrecht zur Sensitivitätsachse 54 des ersten Magnetfeldsensors 50 beziehungsweise radial zum Elastomerkörper 130 verläuft. Durch diesen zusätzlichen Magnetfeldsensor 170 ist mittels der hier nicht eingezeichneten elektronischen Auswerteeinheit ein Ausmessen und Bewerten zumindest einer Höhe h₁ des ersten Luftspalts L_{S1} möglich. Entsprechend kann auch dem zweiten Magnetfeldsensor 52 ein derartiger zusätzlicher radialer Magnetfeldsensor zum Ausmessen und Bewerten einer, der besseren zeichnerischen Übersicht halber nicht bezeichneten Höhe des zweiten Luftspalts L_{S2} zugeordnet sein. Grundsätzlich können alle erfindungsgemäßen Messanordnungen mit wenigstens einem derartigen, zusätzlichen radialen Magnetfeldsensor ausgestattet sein.

### Bezugszeichenliste

- 10: Elastomerkörper (plattenförmig)
- 12: Lineares Magnetisierungsmuster
- 14: Magnetfeldsensor
- 16: Hall-Sensor
- 18: Sensitivitätsachse des Magnetfeldsensors
- 20: Kurvenverlauf
- 22: Positiver Messwert
- 24: Negativer Messwert
- 30: Elastomerkörper (zylindrisch, erste Ausführungsform)
- 32: Welle
- 32a: Wellenende eines ersten Teils einer zweiteiligen Welle
- 32b: Wellenende eines zweiten Teils einer zweiteiligen Welle
- 34: Längsachse der Welle
- 40: Erstes Magnetisierungsmuster
- 42: Erster ringförmiger magnetischer Messbereich
- 44: Zweiter ringförmiger magnetischer Messbereich
- 46: Ferritisches Material
- 50: Magnetfeldsensor, einachsiger Hall-Sensor
- 52: Magnetfeldsensor, einachsiger Hall-Sensor
- 54: Sensitivitätsachse, Messachse
- 56: Sensitivitätsachse, Messachse
- 58: Verbindungsachse
- 60: Messanordnung (erste Ausführungsform)
- 62: Elektronische Auswerteeinheit
- 64: Sensorleitung
- 66: Sensorleitung
- 72: Erster Kurvenverlauf eines Messsignals
- 74: Zweiter Kurvenverlauf eines Messsignals
- 80: Elastomerkörper (zylindrisch, zweite Ausführungsform)
- 90: Zweites Magnetisierungsmuster
- 92: Erster ringförmiger magnetischer Messbereich
- 94: Zweiter ringförmiger magnetischer Messbereich
- 100: Messanordnung (zweite Ausführungsform)
- 104: Differenzverstärker
- 110: Sensorleitung
- 112: Sensorleitung
- 118: Magnetische Feldlinie
- 120: Magnetische Feldlinie
- 122: Ausgangssignal
- 130: Elastomerkörper (zylindrisch, dritte Ausführungsform)
- 132: Drittes Magnetisierungsmuster
- 134: Erster ringförmiger magnetischer Messbereich
- 136: Zweiter ringförmiger magnetischer Messbereich
- 140: Messanordnung (dritte Ausführungsform)
- 146: Sensorleitung
- 148: Sensorleitung
- 154: Magnetische Feldlinie
- 156: Magnetische Feldlinie
- 160: Abgriff
- 170: Optionaler radialer Magnetfeldsensor
- 172: Sensitivitätsachse der Magnetfeldsensoren
- A: Abstand
- B: Magnetische Flussdichte
- N: Nordpoldomäne
- S: Südpoldomäne
- L_{E1}: Axiale Länge des ersten Elastomerkörpers
- L_{E2}: Axiale Länge des zweiten Elastomerkörpers
- L_{E3}: Axiale Länge des dritten Elastomerkörpers
- L_{M2}: Axiale Länge des zweiten Magnetisierungsmusters
- L_{M3}: Axiale Länge des dritten Magnetisierungsmusters
- T₁: Torsionsabschnitt des ersten Elastomerkörpers
- T₂: Torsionsabschnitt des zweiten Elastomerkörpers
- T₃: Torsionsabschnitt des dritten Elastomerkörpers
- L_{S1}: Erster Luftspalt
- L_{S2}: Zweiter Luftspalt
- h₁: Höhe des ersten Luftspalts
- M: Drehmoment an der Welle
- n: Drehzahl der Welle
- f₁: Frequenz des ersten Messsignals
- f₂: Frequenz des zweiten Messsignals
- f₅: Frequenz des erstes Messsignals
- f₆: Frequenz des zweiten Messsignals
- S₁: Erstes Messsignal
- S₂: Zweites Messsignal
- S₃: Erstes Messsignal
- S₄: Zweites Messsignal
- S₅: Erstes Messsignal
- S₆: Zweites Messsignal
- α: Winkel
- ϕ: Phasenverschiebung der Messsignale

## Patentansprüche

1. Elastomerkörper (30; 80; 130) zur Drehmomentmessung und/oder Drehzahlmessung einer um deren Längsachse (34) drehbaren, einteiligen oder mehrteiligen Welle (32; 32a, 32b), **dadurch gekennzeichnet, dass** der Elastomerkörper (30; 80; 130) eine zylindrische Geometrie aufweist und drehfest mit der Welle (32; 32a, 32b) verbunden oder verbindbar ist, und dass im Elastomermaterial des Elastomerkörpers (30; 80; 130) zum Ausbilden eines Magnetisierungsmusters (40; 90; 132) wenigstens zwei ringförmige magnetische Messbereiche (42, 44; 92, 94; 134, 136) mit unterschiedlicher magnetischer Polarität ausgebildet sind, wobei diese magnetischen Messbereiche (42, 44; 92, 94; 134, 136) derartig ausgebildet und/oder angeordnet sind, dass deren jeweilige Magnetisierungsrichtung mittels mindestens zwei radial oberhalb des Elastomerkörpers (30; 80; 130) angeordneten sowie in Längsrichtung desselben zueinander beabstandeten Magnetfeldsensoren (50, 52) berührungslos messbar ist.

2. Elastomerkörper (30; 80; 130) nach Anspruch 1, **dadurch gekennzeichnet, dass** dieser drehfest und axial unverschiebbar mit der Welle (32; 32a, 32b) verbunden ist.

3. Elastomerkörper (30; 80; 130) nach Anspruch 2, **dadurch gekennzeichnet, dass** dieser durch Formschluss oder durch Vulkanisation drehfest und axial unverschiebbar mit der Welle (32; 32a, 32b) verbunden ist.

4. Elastomerkörper (30; 80; 130) nach Anspruch 1, **dadurch gekennzeichnet, dass** dieser als eine elastische Kupplung mit zwei axial endseitigen Flanschen ausgebildet ist, wobei die beiden Flansche mit zwei zueinander axial fluchtenden Wellenenden einer mehrteiligen Welle (32a, 32b) verbindbar sind.

5. Elastomerkörper (30; 80; 130) nach einem der Ansprüche 1 bis 4, **dadurch gekennzeichnet, dass** zur Ausbildung der Messbereiche (42, 44; 92, 94; 134, 136) im Elastomermaterial des Elastomerkörpers (30, 80, 130) ferritisches, magnetisiertes Material (46) angeordnet ist.

6. Elastomerkörper (30) nach einem der Ansprüche 2 bis 5, **dadurch gekennzeichnet, dass** die beiden Messbereiche (42, 44) des Elastomerkörpers (30) zum Ausbilden eines ersten Magnetisierungsmusters (40) jeweils abwechselnd eine Mehrzahl von in etwa gleich großen magnetischen Nordpoldomänen (N) und Südpoldomänen (S) aufweisen, dass die beiden Messbereiche (42, 44) in Längsrichtung des Elastomerkörpers (30) voneinander beabstandet sind, und dass die Nordpoldomänen (N) sowie die Südpoldomänen (S) des ersten Messbereiches (42) genau gegenüber zu den Nordpoldomänen (N) und Südpoldomänen (S) des zweiten Messbereiches (42) angeordnet sind.

7. Elastomerkörper (80) nach einem der Ansprüche 2 bis 5, **dadurch gekennzeichnet, dass** die beiden Messbereiche (92, 94) des Elastomerkörpers (80) zum Ausbilden eines zweiten Magnetisierungsmusters (90) eine bezüglich des Umfangs des Elastomerkörper (80) umlaufende magnetische Nordpoldomäne (N) und eine umlaufende magnetische Südpoldomäne (S) bilden, wobei die Nordpoldomäne (N) und die Südpoldomäne (S) unmittelbar axial aneinander liegen.

8. Elastomerkörper (130) nach einem der Ansprüche 2 bis 5, **dadurch gekennzeichnet, dass** die beiden Messbereiche (134, 136) des Elastomerkörpers (130) zum Ausbilden eines dritten Magnetisierungsmusters (132) jeweils abwechselnd eine Mehrzahl von in etwa gleich großen magnetischen Nordpoldomänen (N) und magnetischen Südpoldomänen (S) aufweisen, wobei jeweils eine Nordpoldomäne (N) des ersten Messbereiches (134) und eine Südpoldomäne (S) des zweiten Messbereiches (136) unmittelbar axial aneinander liegen.

9. Messanordnung (60; 100; 140) zur Messung eines Drehmoments (M) an einer rotierenden Welle (32; 32a, 32b) und/oder einer Drehzahl der rotierenden Welle (32; 32a, 32b), **dadurch gekennzeichnet, dass** die Messanordnung (60; 100; 140) einen auf der Welle (32) oder zwischen Wellenenden (32a, 32b) der Welle (32) angeordneten Elastomerkörper (30; 80; 130) mit den Merkmalen von wenigstens einem der Ansprüche 1 bis 8 aufweist, und dass den ein Magnetisierungsmuster (40, 90, 132) ausbildenden ringförmigen magnetischen Messbereichen (42, 44; 92, 94; 134, 136) des Elastomerkörpers (30, 80, 130) mindestens zwei Magnetfeldsensoren (50, 52) unter Freihaltung eines schmalen Luftspalts (L_{S1}, L_{S2}) zugeordnet sind, mittels denen eine drehmomentbedingte Formänderung des Elastomerkörpers (30; 80; 130) in einem axialen Torsionsabschnitt (T₁, T₂, T₃) der Welle (32; 32a, 32b) messbar ist, und dass eine mit den Magnetfeldsensoren (50, 52) über Sensorleitungen (64, 66, 120, 122, 146, 148) verbundene elektronische Auswerteeinheit (62) vorhanden ist, mittels welcher auf der Basis der ermittelbaren Messsignale (S₁, S₂, S₃, S₄, S₅, S₆) von wenigstens zwei Magnetfeldsensoren (50, 52) zumindest das von der Welle (32; 32a, 32b) übertragene Drehmoment (M) bestimmbar ist.

10. Messanordnung (60) nach Anspruch 9, **dadurch gekennzeichnet, dass** der erste Messbereich (42) eines ersten Magnetisierungsmusters (40) mittels des ersten Magnetfeldsensors (50) zur Erzeugung eines ersten Messsignals (S₁) und der zweite Messbereich (44) des ersten Magnetisierungsmusters (40) mittels des zweiten Magnetfeldsensors (52) zur Erzeugung eines zweiten Messsignals (S₂) berührungslos abtastbar ist, wobei das von der Welle (32; 32a, 32b) übertragene Drehmoment (M) aus einer Phasenverschiebung (ϕ) zwischen den beiden Messsignalen (S₁, S₂) der beiden Magnetfeldsensoren (50, 52) mittels der elektronischen Auswerteeinheit (62) ermittelbar ist und/oder die Drehzahl der Welle (32; 32a, 32b) aus einer Frequenz (f₁, f₂) mindestens eines Messsignals (S₁, S₂) der Magnetfeldsensoren (50, 52) mittels der elektronischen Auswerteeinheit (62) bestimmbar ist.

11. Messanordnung (100) nach Anspruch 9, **dadurch gekennzeichnet, dass** der erste Messbereich (92) eines zweiten Magnetisierungsmusters (90) mittels des ersten Magnetfeldsensors (50) zur Erzeugung eines ersten Messsignals (S₃) und der zweite Messbereich (94) des zweiten Magnetisierungsmusters (90) mittels des zu dem ersten Magnetfeldsensor (50) entgegengesetzt orientierten zweiten Magnetfeldsensors (52) zur Erzeugung eines zweiten Messsignals (S₄) berührungslos abtastbar ist, wobei das von der Welle (32; 32a, 32b) übertragene Drehmoment (M) aus einer Differenzbildung zwischen den Messsignalen (S₃, S₄) der beiden Magnetfeldsensoren (50, 52) mittels eines Differenzverstärkers (104) der elektronischen Auswerteeinheit (62) ermittelbar ist.

12. Messanordnung (140) nach Anspruch 9, **dadurch gekennzeichnet, dass** der erste Messbereich (134) eines dritten Magnetisierungsmusters (132) mittels des ersten Magnetfeldsensors (50) zur Erzeugung eines ersten Messsignals (S₅) und der zweite Messbereich (136) des dritten Magnetisierungsmusters (132) mittels des dem ersten Magnetfeldsensor (50) entgegengesetzt orientierten zweiten Magnetfeldsensors (52) zur Erzeugung eines zweiten Messsignals (S₆) berührungslos abtastbar ist, wobei das von der Welle (32; 32a, 32b) übertragene Drehmoment (M) aus einer Differenzbildung zwischen den Messsignalen (S₅, S₆) der beiden Magnetfeldsensoren (50, 52) mittels eines Differenzverstärkers (104) der elektronischen Auswerteeinheit (62) ermittelbar ist und/oder eine Drehzahl der Welle (32; 32a, 32b) aus einer Frequenz (f₅, f₆) eines der Messsignale (S₅, S₆) der beiden Magnetfeldsensoren (50, 52) mittels der elektronischen Auswerteeinheit (62) ermittelbar ist.

13. Messanordnung (60, 100, 140) nach einem der Ansprüche 9 bis 12, **dadurch gekennzeichnet, dass** mindestens einem der beiden Magnetfeldsensoren (50, 52) ein zusätzlicher radialer Magnetfeldsensor (170) zum Messen der Höhe (h₁) mindestens eines der Luftspalte (L_{S1}, L_{S2}) zwischen der radialen Außenseite des Elastomerkörpers (30, 80, 130) und dem jeweiligen Magnetfeldsensor (50, 52) zugeordnet ist.
